Europäisches Patentamt

European Patent Office

Office européen des brevets

(19)

(11) **EP 0 753 762 B1**

(12) **EUROPEAN PATENT SPECIFICATION**

(45) Date of publication and mention
of the grant of the patent:
**27.03.2002   Bulletin 2002/13**

(51) Int Cl.[7]: **G02B 1/10**

(21) Application number: **96110847.9**

(22) Date of filing: **04.07.1996**

(54) **Electrically conductive, anti-reflection coating**

Elektrisch leitender, Antireflektionsbelag

Couche antiréfléchissante et conductrice

(84) Designated Contracting States:
**DE ES FR GB**

(30) Priority:   **06.07.1995   JP 17092595**

(43) Date of publication of application:
**15.01.1997   Bulletin 1997/03**

(73) Proprietor: **SONY CORPORATION**
**Tokyo (JP)**

(72) Inventors:
 • **Lippey, Barret, c/o Sony Corp.**
**Tokyo (JP)**
 • **Ishikawa, Hiroichi, c/o Sony Corp.**
**Tokyo (JP)**

(74) Representative: **Müller, Frithjof E., Dipl.-Ing. et al**
**Müller Hoffmann & Partner**
**Patentanwälte**
**Innere Wiener Strasse 17**
**81667 München (DE)**

(56) References cited:
**EP-A- 0 200 452**         **EP-A- 0 564 709**
**US-A- 4 264 133**         **US-A- 5 091 244**
**US-A- 5 190 807**

**Description**

BACKGROUND OF THE INVENTION

This invention relates to an anti-reflection film as an optical film deposited on a supporting layer and configured for having anti-reflection properties and for preventing leakage of electro-magnetic waves or accumulation of static charges.

DESCRIPTION OF RELATED ART

Up to now, an anti-reflection film has been extensively used in the field of optical or opto-electrical application where it is desired or necessary to decrease the refractive index on an optical boundary between, for example, air and glass. Examples of such application include a camera lens, a platen for a copying machine, a cover glass for equipment, a panel for a cathode-ray tube and other display devices.

Among optical thin-film coatings, employed in a variety of application fields, there are a sole coating layer of a film composed of magnesium fluoride, a dual layer coating which minimizes the refractive index in a wavelength range, and a multi-layer broad-range coating producing a low refractive index over a broader wavelength range, such as a visible range.

The dual-layer coating is now explained.

A dual-layer anti-reflection film, as disclosed in US Patent No.4422721 (anti-reflection film A), is made up of at least one layer of a low refractive index material, such as magnesium fluoride, a thin transparent layer of an electrically conductive high refractive index material, such as indium tin oxide (ITO), cadmium stannate or tin antimony oxide. This dual-layer anti-reflection film is made up of the layer of low refractive index material and the thin transparent layer of the electrically conductive high refractive index material, deposited in this order on the surface of an optical substrate. The layer of the electrically conductive material has an optical thickness of 1.0 to 30.0 nm, while the layer of the low refractive index material has a film thickness correlated with the thickness of the layer of the electrically conductive material for prohibiting deterioration of the layer of the electrically conductive material.

The dual-layer anti-reflection film A, made up of a film of low refractive index material and a high refractive index material, provides a directly electrically connectable electrically conductive anti-reflection film which may be used with advantage for a CRT or a copying machine.

An dual-layer anti-reflection film, disclosed in US Patent No.4732454 (anti-reflection film B), is made up of a transparent substrate of a synthetic material, a hard scratch-proof first layer deposited on the substrate, a second layer of an electrically conductive material, intimately affixed to the first layer and formed by vacuum deposition or sputtering by high frequency discharge at a temperature lower than 150· C in the presence of oxygen atoms and a third layer formed of a material having a lower refractive index than that of the second layer and intimately affixed to the second layer. The second layer is comprised of INTO as its ingredient.

The anti-reflection film B can propagate light and can be coated on a protective layer of a synthetic material so as to serve as an anti-reflection film suitable as a filter with respect to electro-magnetic waves emanating from the CRT filter.

The above anti-reflection film A leaves much to be desired in that it is lower in electrical conductivity and in reflection inhibiting ratio over a wide frequency range.

Similarly to the anti-reflection film A, the above anti-reflection film B leaves much to be desired in that it is lower in reflection inhibiting ratio over a wide frequency range.

If the anti-reflection film low in electrical conductivity is attached to a panel for CRT, it has only little effect in preventing static charges or inhibiting an output of elector-magnetic waves from being outputted from a CRT panel.

Further exemples of conductive, anti-reflection coatings are known from US 5 091 244 A, EP 0 564 709 A and US 4 264 133 A.

SUMMARY OF THE INVENTION

The present invention is defined in claim 1.

It is therefore an object of the present invention to provide an anti-reflection film having high electrical conductivity and high reflection inhibiting ratio in a broad frequency range.

An anti-reflection film according to the present invention has two mutually neighboring layers which are deposited directly or via a hard coating layer on a supporting layer. One of the layers that is closer to a substrate layer is formed of an electrically conductive material capable of absorbing light, while the remaining second layer is formed of a material having a refractive index not higher than 2.0. If the first layer has the refractive index and the extinction coefficient for a shorter wavelength $\lambda_v$ of $n_v$ and $k_v$, respectively, and the refractive index and the extinction coefficient for a longer wavelength $\lambda_r$ of $n_r$ and $k_r$, respectively, $n_v$ is larger than $n_r$ and $k_v$ is smaller than $k_r$ ($n_v > n_r$ and $k_v < k_r$).

If the first layer is generated in the presence of oxygen with an oxygen partial pressure of not more than 50%, the amount of generation of oxides may be reduced for reducing deterioration in electrical conductivity.

According to the present invention, there is provided an anti-reflection film having high electrical conductivity and high anti-reflection effect over a wide frequency range despite its simplified structure, thus prohibiting static charges or elector-magnetic waves from being outputted from an optical substrate on which is affixed the anti-reflection film.


BRIEF DESCRIPTION OF THE DRAWINGS

Fig.1 illustrates essential portions of an anti-reflection film embodying the present invention.

Fig.2 is a graph showing an example of an admittance diagram for illustrating the selecting principle of the first layer of the anti-reflection film shown in Fig.1.

Fig.3 is a graph showing an admittance diagram of a conventional $TiO_2$-$SiO_2$ anti-reflection film.

Fig.4 is a graph showing an admittance diagram of an ITO/Au-$SiO_2$ anti-reflection film embodying the present invention.

Fig.5 is a graph showing the relation between the refractive index or the extinction coefficient of the first layer of the anti-reflection film and the wavelength.

Fig.6 is a graph showing an admittance diagram for the wavelength $\lambda$ of 405 nm of a $TiN_x(W)$-$SiO_2$ anti-reflection film.

Fig.7 is a graph showing an admittance diagram for the wavelength $\lambda$ of 546 nm of the $TiN_x(W)$-$SiO_2$ anti-reflection film shown in Fig.6.

Fig.8 is a graph showing an admittance diagram for the wavelength $\lambda$ of 633 nm of the $TiN_x(W)$-$SiO_2$ anti-reflection film shown in Fig.6.

Fig.9 is a graph showing an admittance diagram for the wavelength $\lambda$ of 405 nm of a $ZrN_xO_y$-$SiO_2$ anti-reflection film.

Fig.10 is a graph showing an admittance diagram for the wavelength $\lambda$ of 633 nm of the $ZrN_xO_y$-$SiO_2$ anti-reflection film shown in Fig.9.

Fig.11 is a graph showing the reflectance of the $TiN_x$-$SiO_2$ anti-reflection film, as found by calculations.

Fig.12 is a graph showing the transmittance of the $TiN_x$-$SiO_2$ anti-reflection film of Fig.11, as found by calculations.

Fig.13 is a graph showing the reflectance of the $TiN_x$-$SiO_2$ anti-reflection film of Fig.11, as found by measurements.

Fig.14 is a graph for illustrating the relation between the reflectance and a distance between the refractive index/extinction coefficient on the low range side and the refractive index/extinction coefficient on the high range side for the anti-reflection film according to the present invention.

Fig.15 is a graph showing the reflectance of the $TiN_x(W)$-$SiO_2$ anti-reflection film.

Fig.16 is a graph showing the transmittance of the $TiN_x(W)$-$SiO_2$ anti-reflection film of Fig.15 as found by calculations.

Fig.17 is a graph showing the reflectance of the $TiN_x(W)$-$SiO_2$ anti-reflection film of Fig.15, as found by measurements.

Fig.18 schematically shows an example of application of the anti-reflection film embodying the present invention.


DESCRIPTION OF THE PREFERRED EMBODIMENTS

Referring to the drawings, preferred embodiments of the present invention will be explained in detail.

The anti-reflection film is directly deposited on the surface of an optical substrate for diminishing the amount of the reflected light from the optical substrate surface and exhibits electrical conductivity on the surface of the optical substrate. Also, the anti-reflection film is deposited on a flexible supporting layer of, for example, polyethylene terephthalate (PET) so as to serve as an anti-reflection film sheet which is bonded on a display surface, such as glass surface, of a display apparatus comprised of a cathode ray tube (CRT). Alternatively, the anti-reflection film is directly deposited on the display surface at the time of manufacture of the CRT of the display apparatus for suppressing the glaring reflected light from the display surface or suppressing emission of elector-magnetic waves or static charges to a minimum. In addition, since only two thin-film layers suffice, the anti-reflection film takes only a small amount of material and can be furnished at a low cost.

The anti-reflection film of the present invention has two features, namely that it exhibits anti-reflection characteristics using a light-absorbing material with the refractive index n and the extinction coefficient k, and that optical characteristics in the wavelength range are thereby broadened thus enabling a broader wavelength range for the anti-refection film with a smaller number of component films than with the conventional multi-layer film.

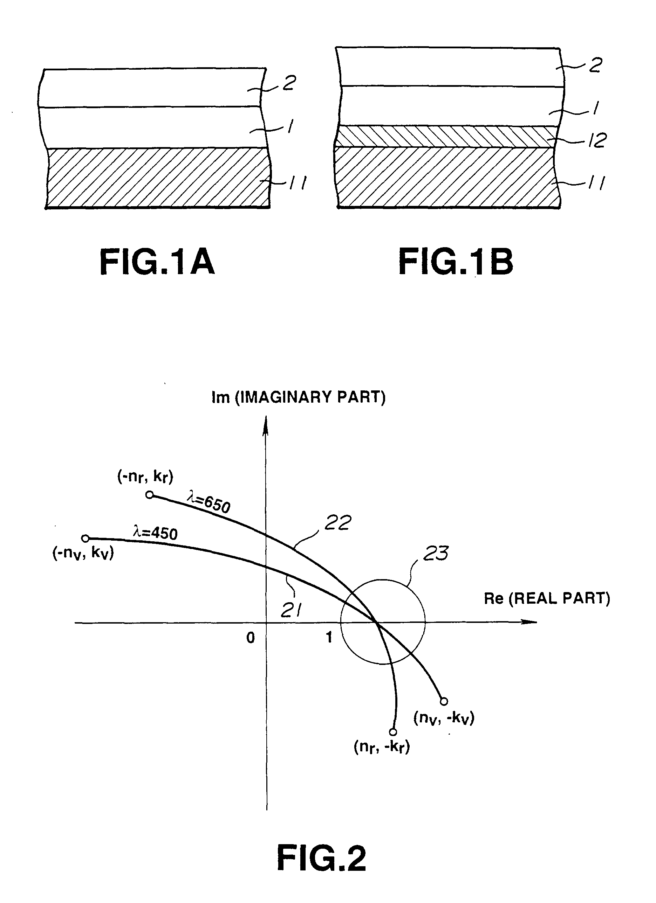

The above-mentioned flexible supporting layer is used as a supporting layer 11, and the anti-reflective film is made up of a first layer 1 and a second layer 2, looking from the side closer to the supporting layer 11, as shown in Fig.1A. Alternatively, a hard coating, or a hard coat layer 12, is first formed on the supporting layer 11, and a first layer 1 is formed on the hard coat layer 12, as shown in Fig.IB.

Among the conditions of selecting the first layer 1 are low cost, high adhesion to the surface of the optical substrate, high durability, low stress, and an adjustable optimum refractive index n or extinction coefficient k. Among the conditions of selecting the second layer 2 are low cost, low refractive index, low stress, hardness and high durability.

As a principle of the present embodiment, optimum optical characteristics will be explained using the principle of the admittance diagram.

The optical admittance is generally given as a complex number. If units are selected appropriately, the real part may be numerically equated to the refractive index n of the space or a substance allowing passage of light, while the imaginary part may be numerically equated to the extinction coefficient of the above space or the substance.

In addition, each point representing admittance follows the admittance diagram as later explained, and is characteristic of the substance employed, while being dependent on the thickness of the substance traversed by light.

Fig.2 shows an admittance diagram of $TiN_x$ and $SiO_2$ on a glass substrate as later explained. In Fig.2, $n_v$ and $k_v$ denote the refractive index and extinction coefficient for a wavelength $\lambda$ = 450 nm, respectively, while $n_r$ and $k_r$ denote the refractive index and extinction coefficient for a wavelength $\lambda$ = 650 nm. The loci of movement of the admittance values pass through a point (1.52, 0) on the glass substrate on the real axis so as to be converged with increased film thickness at points $(n_v, -k_v)$, $(n_r, -k_r)$.

For $TiN_x$, a curve 21 passing through points $(-n_v, k_v)$ and $(n_v, -k_v)$ and the aforementioned pre-set point (1.52, 0) represents the above admittance diagram for w wavelength $\lambda$ = 450 nm. On the other hand, a curve 22 passing through points $(-n_r, k_r)$ and $(n_r, -k_r)$ and the aforementioned pre-set point (1.52, 0) represents the above admittance diagram for w wavelength $\lambda$ = 650 nm.

On the other hand, the admittance diagram for $SiO_2$ is obtained as a curve 23 which is a circle with a radius of 0.56 and with a center at $((1.46^2 + 1)/2,0)$ = (1.56, 0).

In forming a dual-layer film, the locus of movement of the admittance may be formed by combining curves 21, 22 and 23.

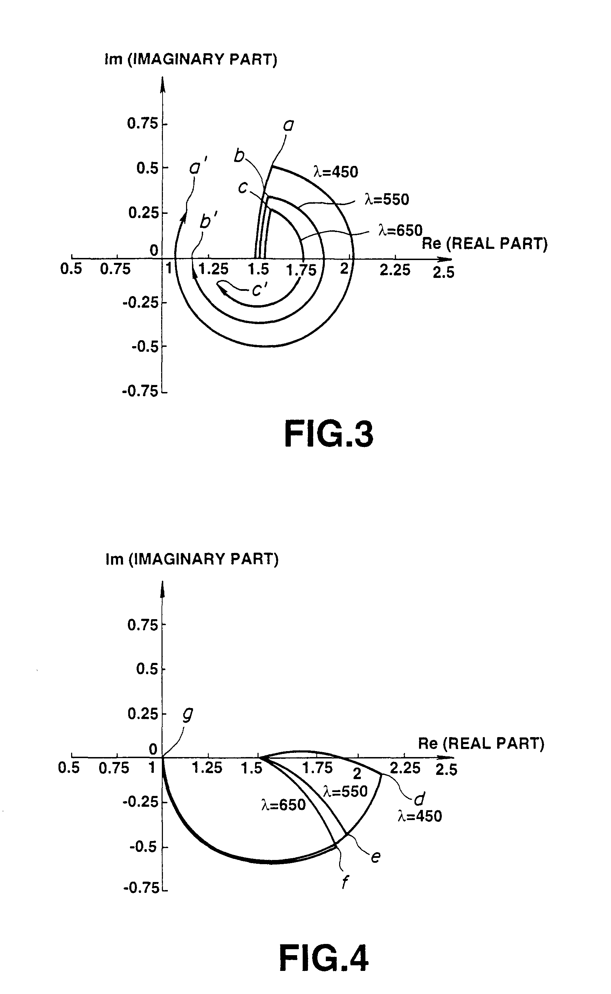

Fig.3 shows an admittance diagram of an anti-reflection film in which the first layer is a film of titanium dioxide $(TiO_2)$ and the second layer is a film of silicon dioxide $(SiO_2)$ termed a V-coat. Meanwhile, $TiO_2$ is higher in refractive index, while $SiO_2$ is lower in refractive index and larger in film thickness than $TiO_2$.

Fig.3 shows an admittance diagram of the anti-reflection film of the dual-layer film $(TiO_2$-$SiO_2)$ for incident visible light beams with wavelength $\lambda$ of 450 nm, 550 nm and 650 nm. For example, for the wavelength $\lambda$ = 450 nm, the locus of movement when the light passes through $TiO_2$ is denoted by the locus of movement beginning at near n = 1.52 and ending at a point a lying at a one-o'clock position, while the locus of admittance when the light passes through $SiO_2$ is denoted by an arc locus of movement beginning from the point a and ending at a point a' lying at a 10-o'clock position. For the wavelength $\lambda$ = 550 nm, the locus of movement when the light passes through $TiO_2$ is denoted by the locus of movement beginning at a starting point and ending at a point b, while the locus of admittance when the light passes through $SiO_2$ is denoted by a locus of movement beginning from the point b and ending at a point b'. Similarly, for the wavelength $\lambda$ = 650 nm, the locus of movement when the light passes through $TiO_2$ is denoted by the locus of movement beginning at a starting point and ending at a point c while the locus of movement of admittance when the light passes through $SiO_2$ is denoted by a locus of movement beginning from the point c and ending at a point c'.

As may be seen from the admittance diagrams of the $(TiO_2$-$SiO_2)$ anti-reflection film, since the distance of movement of the locus of movement of the admittance when the light passes through the first and second films differs with the wavelength $\lambda$ of the incident light, the coordinates of the end points a', b' and c' of the respective loci of movement are not constant. From this it may be said that, if the wavelength of the incident light is varied, the optical film thickness QWOT (quarter wave of optical thickness; an optical thickness represented with $\lambda/4$ as a unit) of the $TiO_2$-$SiO_2$ is changed. That is, if the light having a wavelength from 450 to 650 nm is incident, it may be predicted that there exists reflected light depending on the wavelength, with the light volume being correspondingly changed.

In this respect, it is difficult with the anti-reflection film made up of the dual-layer film to prevent reflection of light of a broad wavelength range, such that improvement is desired.

In an embodiment of the present invention, the above-mentioned first layer is made up of indium tin oxide (ITO) and gold (Au) and the second film is formed of $SiO_2$. Fig.4 shows an admittance diagram of this ITO/Au-$SiO_2$ anti-reflection film. The first layer is constituted so that the refractive index $n_{11}$ of ITO and the refractive index $n_{12}$ of gold Au account for 60% and 40%, respectively, of the refractive index of the first layer, that is so that the refractive index $n_1$ of the first layer is $n_1 = 0.6n_{11} + 0.4n_{12}$. The first layer has a film thickness of, for example, 12.8 nm, while the second layer has a film thickness of, for example, 77.8 nm.

Returning to the anti-reflection film of the dual-layer film (ITO/Au-SiO$_2$), the ITO-Au layer constituting the first layer is a metal layer with a gold color admixed with an electrically conductive oxide and which exhibits different light absorption depending on the wavelength λ of the incident light. The admittance describes loci of movement different as far as the points d, e and f for the wavelengths λ = 450 nm, 550 nm and 650 nm, as shown in Fig.4. The points d, e and f are located at respective different positions and are varied depending on physical properties of the first layer, such as the type of the materials used for the first layer or the thickness of the first layer, or the wavelength of the light incident on the first layer.

The locus of movement of the admittance of the SiO$_2$ layer are from the points d, e and f to the point g. The point g is (1, 0), from which it is seen that the (ITO/Au-SiO$_2$) anti-reflection film has an admittance which goes to 1, that is, completely inhibits reflection, no matter which wavelength range of at least the visible light is incident thereon.

By arranging this first layer as the light absorbing layer, and by determining the physical properties of the first layer based on the admittance diagram of the second layer, an anti-reflection film is realized which is made up only of the first and second layers and which substantially completely prohibits reflection of light in the visible range.

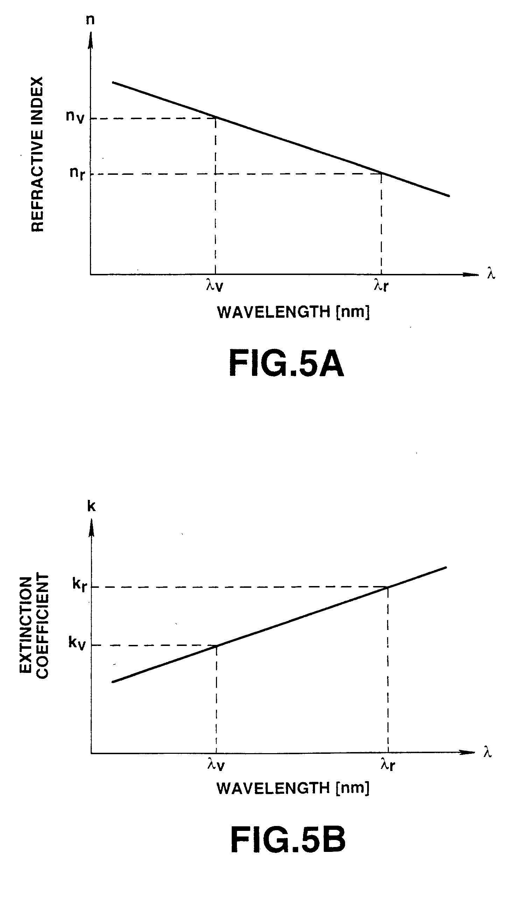

If the conditions of the materials constituting the first layer are selected so that the admittance diagram shown in Fig.2 can be delineated, that is if the shorter wavelength side and the longer wavelength side of selected two wavelengths are denoted as wavelength $\lambda_v$ and $\lambda_r$, and if, in the above first layer, the refractive index and the extinction coefficient for the wavelength $\lambda_v$ are denoted as $n_v$ and $k_v$, respectively, while the refractive index and the extinction coefficient for the wavelength $\lambda_r$ are denoted as $n_r$ and $k_r$, respectively, the relation between the wavelength λ and the refractive index n is represented by a straight line having a negative gradient, as shown for example at A in Fig.5, while the relation between the wavelength λ and the extinction coefficient k is represented by a straight line having a positive gradient, as shown for example at B in Fig.5. That is, the following inequalities (1):

$$n_v > n_r \text{ and } k_v < n_r \tag{1}$$

are met.

The relation between the wavelength λ and the refractive index n and that between the wavelength λ and the extinction coefficient k need not be linear as shown at A and B in Fig.5, it being only sufficient if the relation of the inequalities (1) are met.

Among other materials satisfying the inequalities (1) are gold (Au), copper (Cu) and titanium nitrides (TiN$_x$), where x > 0.

TABLE 1

| | | refractive index [n] | quenching coefficient [k] |
|---|---|---|---|
| Au | 450 nm | $n_v = 1.4$ | $k_v = 1.9$ |
| | 650 nm | $n_r = 0.15$ | $k_r = 3.2$ |
| Cu | 450 nm | $n_v = 1.2$ | $k_v = 2.4$ |
| | 650 nm | $n_r = 0.21$ | $k_r = 3.7$ |
| TiNx | 450 nm | $n_v = 2.4$ | $k_v = 1.2$ |
| | 650 nm | $n_r = 1.7$ | $k_r = 1.8$ |

Therefore, in alternative embodiments not comprised within the present invention, the first layer may be constituted by a titanium nitride (TiN$_x$), zirconium nitride (ZrN$_x$) and a mixture of titanium nitride and zirconium nitride, where x > 0.

The first layer may also be constituted by at least one of titanium oxynitrides (TiN$_x$O$_y$), zirconium oxynitrides (ZrN$_x$O$_y$) and a mixture of titanium oxynitrides (TiN$_x$O$_y$) and zirconium oxynitrides (ZrN$_x$O$_y$), where x > 0 and y > 0.

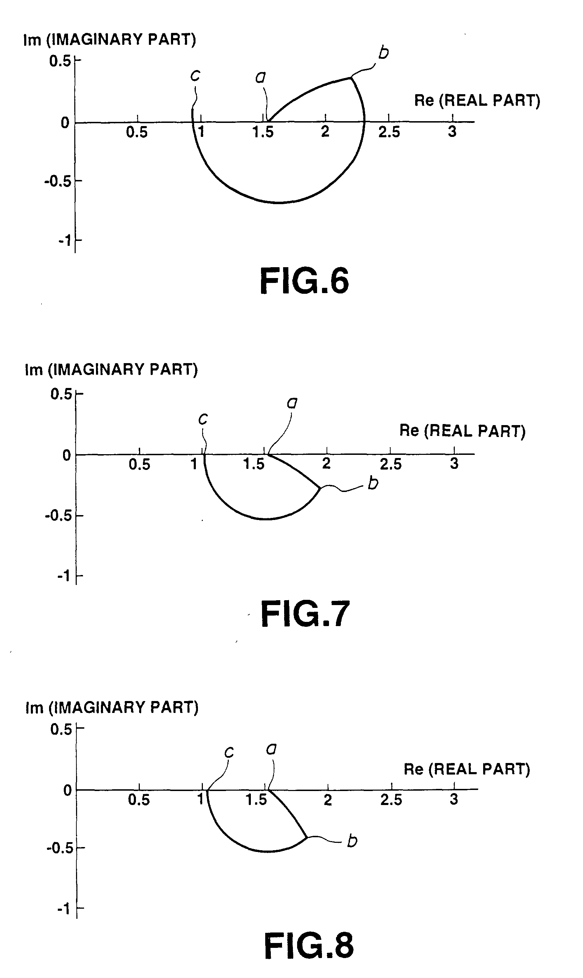

As a modification not comprised within the present invention, an anti-reflection film of a dual-layer film (TiN$_x$(W)-SiO$_2$), employing a film of titanium nitride (TiN$_x$(W)), having tungsten (W) introduced therein as impurities, as the first layer, and also employing a film of SiO$_2$ as the second layer, is now explained by referring to the drawings. For the first layer, preferably $0 < x \leq 1$. Figs.6 to 9 are admittance diagrams of the anti-reflection film comprised of the dual-layer film (TiN$_x$(W)-SiO$_2$). As for the first layer (TiN$_x$(W)), the proportion of tungsten W to titanium Ti is set to 0.6 atom % by carrying out sputtering with tungsten (W) bonded on titanium Ti used as a target. The value of x is set by setting the partial pressure values of argon Ar and nitrogen N$_2$ in a flow gas used for forming the first layer by sputtering so as to be 87% and 13%, respectively, for example.

Figs.6 to 8 illustrate the cases in which the incident visible light beams have different wavelength values $\lambda$. That is, Figs.6, 7 and 8 illustrate admittance diagrams for $\lambda = 405$ nm, $\lambda = 546$ nm and $\lambda = 633$ nm, respectively. The anti-reflection film constituted by this dual-layer film $TiN_x(W)$-$SiO_2$ is made up of the first layer $TiN_x(W)$ with a film thickness of 9.93 nm and the second layer $SiO_2$ with a film thickness of 82.81 nm sequentially deposited on a glass substrate having a refractive index $n_0 = 1.52$ and the extinction coefficient $k_0 = 0$. If $\lambda = 405$ nm in Fig.6, the refractive index $n_1$ and the extinction coefficient $k_1$ of the first layer are 2.5 and 0.73, respectively, whereas, if $\lambda = 546$ nm in Fig. 7, the refractive index $n_1$ and the extinction coefficient $k_1$ of the first layer are 1.58 and 1.49, respectively and, if $\lambda = 633$ nm in Fig.8, the refractive index $n_1$ and the extinction coefficient $k_1$ of the first layer are 1.16 and 1.74, respectively. As for the second layer, the refractive index $n_2$ and the extinction coefficient $k_2$ of the first layer are 1.45 and 0, respectively, without regard to the wavelength. In Figs.6 to 8, curves from point a to point b represent the loci of movement of the admittance when the light passes through the first layer $TiN_x(W)$, while curves from point b to point c represent the loci of movement of the admittance when the light passes through the second layer $SiO_x$.

In Figs.6 to 8, the reflectance R is 0.48%, 0.015% and 0.014% for the incident light wavelength $\lambda$ of 405 nm (Fig.6), 546 nm (Fig.7) and 633 nm (Fig.8), respectively. That is, reflectance R is suppressed to a lower value without regard to the wavelength range of the incident visible light.

In the present modification, by using a light absorbing layer as a first layer and by determining the physical properties of the first layer based on the admittance type of the second layer, an anti-reflection film is realized which is made up of the first layer and the second layer and which substantially completely inhibits reflection of the visible range light.

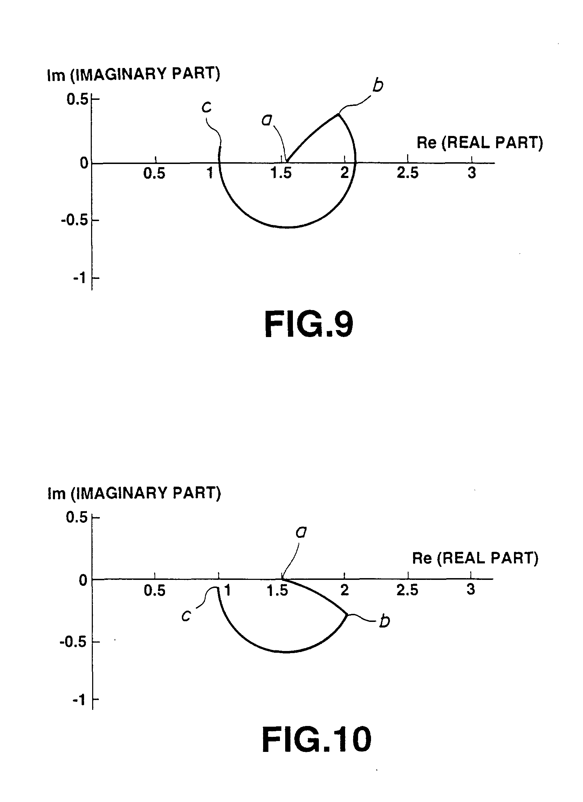

As a further modification not comprised within the present invention, a dual-layer anti-reflection $ZrN_xO_y$-$SiO_2$ film made up of a first layer of zirconium oxynitride $ZrN_xO_y$ and a second layer of $SiO_2$ is explained by referring to admittance diagrams of Figs.9 and 10. The first layer $ZrN_xO_y$, where $0 < x \leq 1$ and $0 < y \leq 2$, is formed of a material having optical properties, which are now explained.

Figs.9 and 10 show admittance diagrams for $\lambda = 405$ nm and for $\lambda = 633$ nm, respectively. In the present modification, the first layer ($ZrN_xO_y$) and the second layer $SiO_2$ are deposited respectively on a glass substrate with the refractive index $n_0$ of 1.52 and the extinction coefficient $k_0$ of zero, to film thicknesses of 9.59 nm and 90.37 nm, respectively. For $\lambda = 405$ nm of Fig.9, the refractive index $n_1$ and the extinction coefficient $k_1$ of the first layer are 2.4 and 0.4, respectively, whereas, for $\lambda = 633$ nm of Fig.10, the refractive index $n_1$ and the extinction coefficient $k_1$ of the first layer are 1.72 and 1.75, respectively. As for the second layer, the refractive index $n_2$ and the extinction coefficient $k_2$ are 1.45 and zero, respectively, regardless of the wavelength. In Figs.9 and 10, curves from point a to point b represent the loci of movement of the admittance when the light passes through the first layer $ZrN_xO_y$, while curves from point b to point c represent the loci of movement of the admittance when the light passes through the second layer $SiO_2$.

In Figs.9 and 10, the reflectance R is 0.39% and 0.081% for the incident light wavelength $\lambda$ of 405 nm (Fig. 9) and 636 nm (Fig.10), respectively. That is, reflectance R is suppressed to a lower value without regard to the wavelength range of the incident visible light.

An embodiment not comprised within the present invention, constituted by a dual-layer anti-reflection film $TiN_x$-$SiO_2$ employing a titanium nitride $TiN_x$ and silicon dioxide $SiO_2$ as the first and second layers, respectively, is now explained.

Titanium nitride $TiN_x$ has . a refractive index $n_v$ and an extinction coefficient $k_v$ of 2.4 and 1.2 for the light with the wavelength of 450 nm, and a refractive index $n_r$ and an extinction coefficient $k_r$ of 1.7 and 1.8 for the light with the wavelength of 650 nm, as shown in Table 1, and has an admittance diagram as shown in Fig.2.

On the other hand, if titanium oxide is present in admixture in $TiN_x$, the latter is lowered in electrical conductivity, while it is difficult to produce a stabilized system completely freed of oxygen in order to form $TiN_x$ industrially. Therefore, $TiN_x$ employed in the present modification is produced in the presence of oxygen, with the oxygen partial pressure being not higher than 50%.

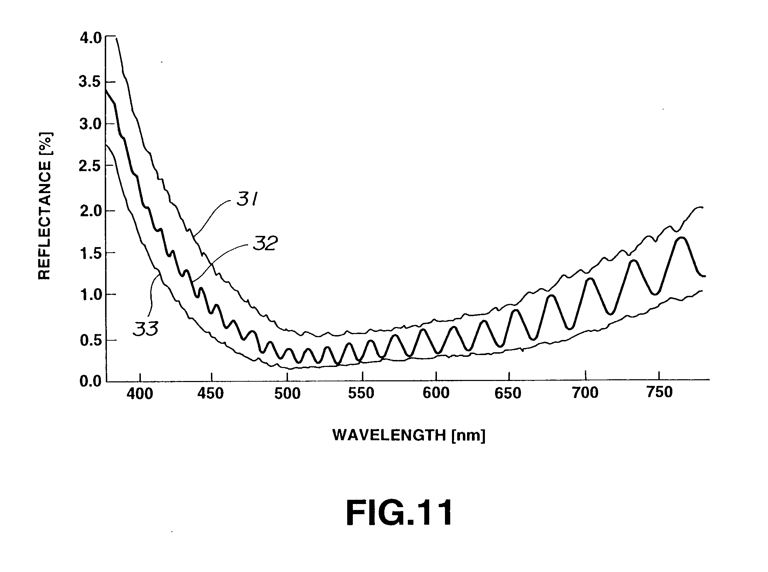

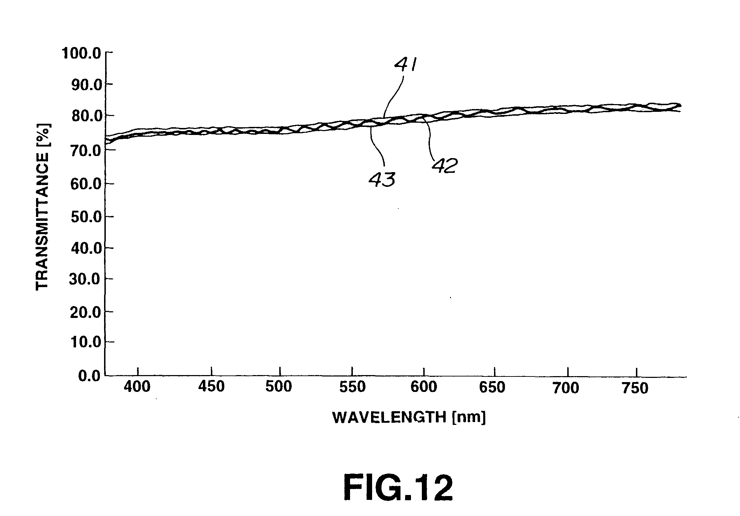

Fig.11 shows the relation between the wavelength nm of the dual-layer $TiN_x$-$SiO_2$ anti-reflection film and the reflectance (%) based on calculated results, while Fig.12 shows the relation between the wavelength nm and transmittance (%) based on calculated results.

In the embodiments of Figs.11 and 12, the structure shown at B in Fig.1 is presupposed. That is, an acrylic resin functioning as a hard coating layer 12 is coated on a polyethylene terephthalate (PET) film functioning as a supporting layer 11, and a $TiN_x$ operating as the first layer 1 and $SiO_2$ operating as the second layer 2 are deposited to a thickness of 10 nm and 80 nm, respectively.

In Fig.11, reflectance R (%) for the wavelength $\lambda$ (nm) is found for 100 samples having a thickness conforming to Gaussian distribution at 1 $\sigma$ of 2% with respect to the above thickness in consideration of thickness fluctuations of the $TiN_x$ at the time of manufacture in order to find an upper limit value, a lower limit value and a mean value, which are indicated as an upper limit value curve 31, a mean value curve 32 and a lower limit value curve 33, respectively. Fig.11 shows a design margin in which, if the thickness of the $TiN_x$ and $SiO_2$ layers are fluctuated on the order of 2% at the time of manufacture, the optical properties of the anti-reflection film are confined in a range between the upper limit value curve 31 and the lower limit value curve 33. The mean value curve 32 exhibits ripple caused by light interference from the hard coating layer.

In Fig.12, the light transmittance assumes different values depending on the thickness of the $TiN_x$ layer, as in Fig.11. Thus, Fig.12 shows an upper limit value curve 41, a mean value curve 42 and a lower limit value curve 43 in the Gaussian distribution for 100 samples with 1 σ equal to 2% thickness variation.

Figs.11 and 12 indicate that the $(TiN_x-SiO_2)$ anti-reflection film may be satisfactorily applied as a reflection inhibiting film for a CRT for which a drastically low reflectance or a drastically flat wavelength to light transmittance curve are not required, and that an anti-reflection film for CRT may be realized by a dual-layer film.

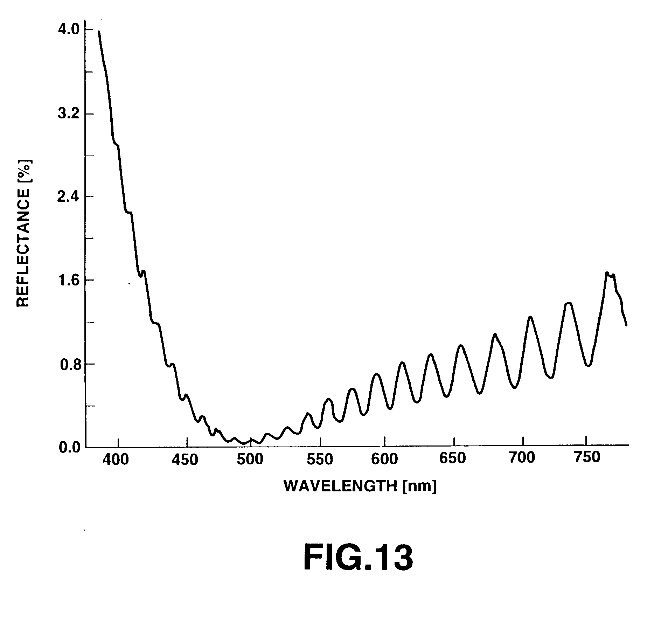

Fig.13 shows the relation between the wavelength (nm) and the reflectance (%) of the $(TiN_x-SiO_2)$ anti-reflection film, as found by measurements. It is seen from Fig.13 that, since a curve similar to one given by the above calculated values has been obtained, the $(TiN_x-SiO_2)$ anti-reflection film represents a desirable embodiment. Moreover , the sheet resistance of the $TiN_x$ layer is 237 ohms/square, which is a value about one-fourth the typical sheet resistance value of 1000 ohms/square capable of suppressing electro-magnetic waves liable to be produced from the front surface of the CRT, meaning that an improved shielding anti-reflection film may be produced.

The range of practical utilization of the anti-reflection film is checked from the relation shown in equation 1. For this checking, the following relationships shown by the equations (2) and (3):

$$n_v > n_r + D \qquad (2)$$

$$k_r > k_v + D \qquad (3)$$

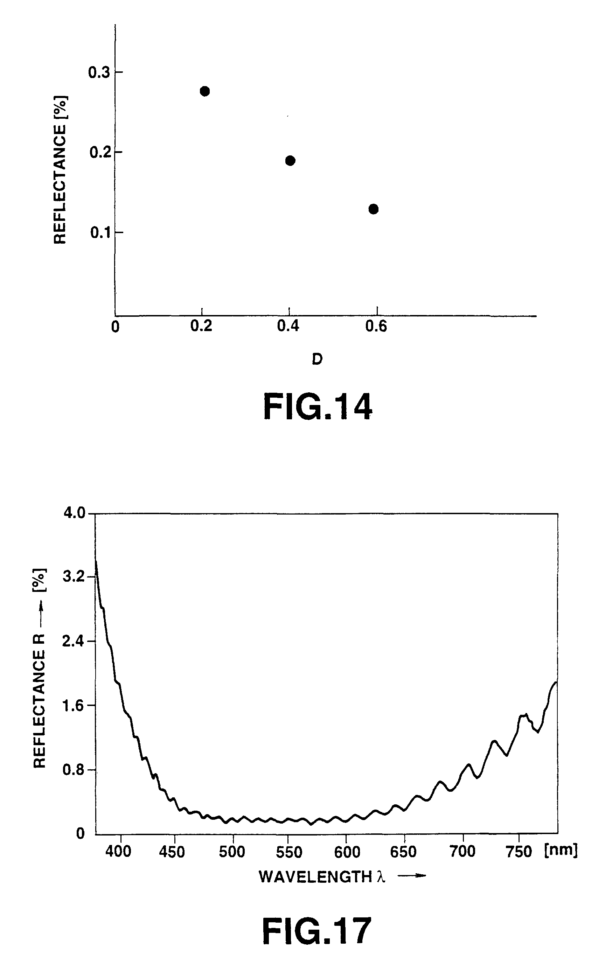

are used. In these equations (2) and (3), "D" denotes the distance between $n_v$ and $n_r$ or the distance between $k_v$ and $k_r$. Fig.14 shows the relation between D and calculated average values of reflectance. If, with the refractive index $n_v$ and the extinction coefficient $k_v$ at short the wavelength $\lambda_v$, the refractived index $n_r$ for the long wavelength $\lambda_r$ is assumed to be $n_v - D$, while the extinction coefficient $k_r$ is assumed to be $k_v + D$. Some values of each of $n_v$, $k_v$ and D are selected in order to find reflectance and a mean value is found for the same value of D.

If $\lambda_v$ = 450 nm, $\lambda_r$ = 650 nm, the refractive index $n_v$ at the wavelength $\lambda_v$ is set to 0.7, 1.5 and 2.5, the extinction coefficient $k_v$ is 1.0 and 4.0, and D is set to 0.2 for each of the refractive index $n_v$ and the extinction coefficient $k_v$ for the short wavelength, the refractive index $n_r$ for the long wavelength is 0.5, 1.3 and 2.2 from $n_v - 0.2$, while the extinction coefficient $k_r$ is 1.2 and 4.2 from $k_v + 0.2$. By finding the reflectance for the six sets of combinations and finding an average value, the mean reflectance 0.28 for D = 0.2 may be found. Similarly, the mean reflectance 0.19 for D = 0.4 and the mean reflectance 0.13 for D = 0.6 are found. Fig.14 shows the relation between D and the reflectance thus found.

Fig.14 shows that, if the reflectance suppressing effect of not more than 0.2 is the range of practical utilization of the anti-reflection film, it is most useful in demonstrating the effect to constitute the first layer of the anti-reflection film by a film having a value of D larger than 0.4, that is by a film having the refractive index n and the extinction coefficient k satisfying the equations (4) and (5):

$$n_v > n_r + 0.4 \qquad (12)$$

$$k_r > k_v + 0.4 \qquad (13)$$

That is, it suffices to design the dual-layer film by setting the refractive index $n_v$ and the extinction coefficient $k_v$ on the short wavelength side and the refractive index $n_r$ and the extinction coefficient $k_r$ on the long wavelength side for satisfying the above condition.

With the above structure of the anti-reflection film, high electrical conductivity and high anti-reflection effect may be realized over a wide frequency range despite the simplified structure of the dual film, thus prohibiting static charges or electro-magnetic waves from being outputted from an optical substrate on which is affixed the anti-reflection film.

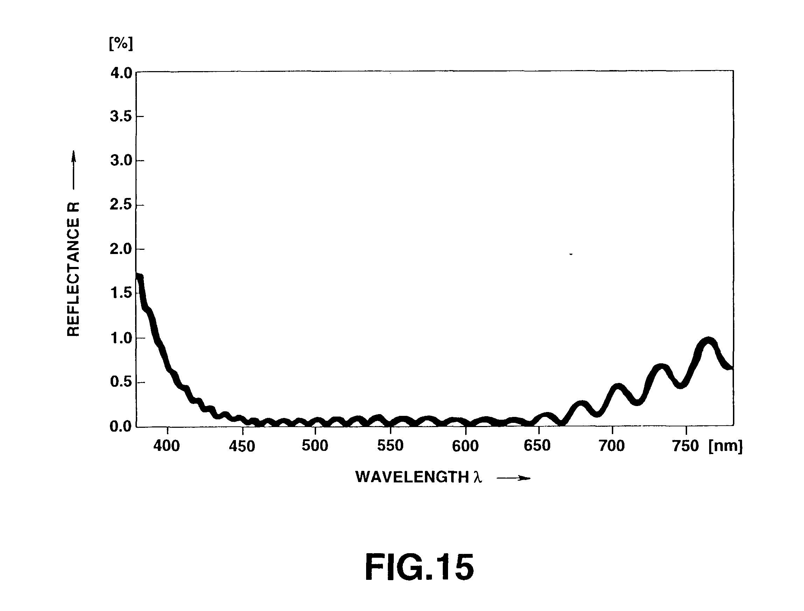

Referring to Figs.15 to 17, the optical properties of a dual-layer anti-reflection film of $TiN_x(W)-SiO_2$, having a film of titanium nitride having tungsten W introduced as impurities, as a first layer, and also having a film of $SiO_2$ as a second layer, will now be explained. In the present embodiment which is not part of the present invention, the dual-layer film is deposited via a hard coat layer of an acrylic resin on a polyethylene terephthalate (PET) substrate. The optical properties of the PET layer include the refractive index n of 1.50, 1.48, 1.46, 1.47, 1.48 and 1.50 for the wavelengths $\lambda$ of 400 nm, 430 nm, 550 nm, 650 nm, 700 nm and 750 nm, respectively, with the extinction coefficient k being zero for all of the wavelengths. The first layer $TiN_x(W)$ has a refractive index n of 2.50 and an extinction coefficient k of 0.73 for the thickness of 9.72 nm and the wavelength $\lambda = 405$ nm, with n = 1.155 and k = 1.735 for $\lambda = 632.8$ nm. As for the second layer of $SiO_2$, n = 1.45 and k = 0 for the thickness of 84.28 nm and the wavelength $\lambda = 546$ nm.

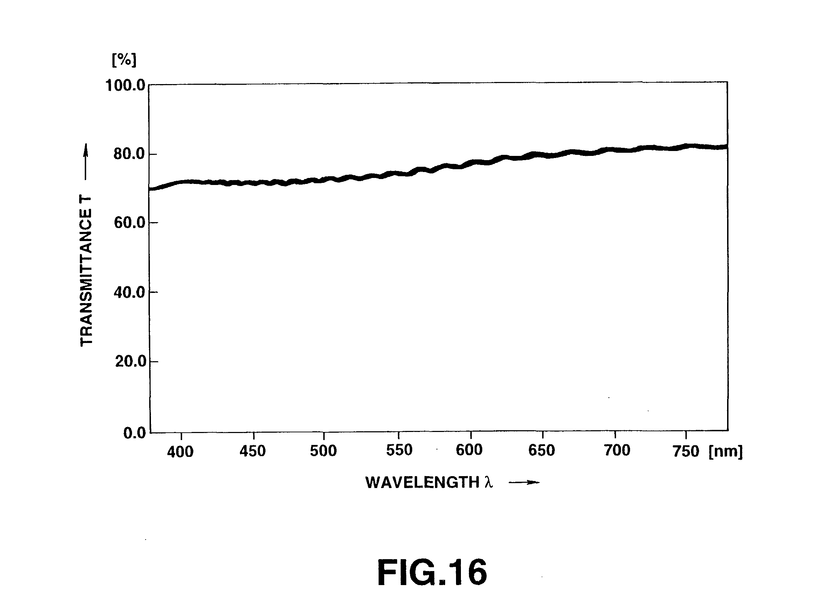

Fig.15 shows values of the reflectance R versus the incident light wavelength $\lambda$, as calculated. Fig.16 shows the calculated values of the transmittance T versus the wavelength $\lambda$.

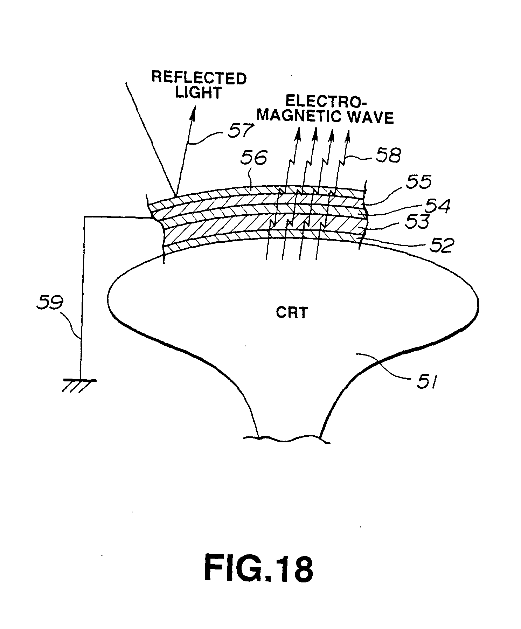

Fig.17 shows the measured values of the reflectance R versus the wavelength $\lambda$ of the dual-layer anti-reflection film as tentatively produced under the above conditions. Fig.17 shows that a dual-layer film obtained by doping $TiN_x$ with tungsten is effective to prevent reflection of light over a wide frequency range of from approximately 450 nm to 680 nm.

By adjusting the film thickness , blue reflected light can be accentuated, while red reflected light can be attenuated. This indicates that, if the dual-layer film is used as an anti-reflection film, the reflected light from the CRT display can be white slightly tinted with blue or purple. Such reflected colors are commonly desirable for CRT display purposes.

With the above construction of the anti-reflection film, an anti-reflection film may be provided which, despite its simple dual-layer construction, is high in electrical conductivity and in anti-refection ratio over a wide frequency range, and has an improved effect in preventing static charges or electro-magnetic waves from being outputted from the surface of the optical substrate, such as a CRT.

Fig.18 shows an instance in which the above-described dual-layer anti-reflection film is applied on a CRT 51. Referring to Fig.18, there is formed on a glass plate on the display surface of the CRT 51 a PET film 53 via a UV-cured resin 52, and an anti-reflection film 55 formed by the above-described dual-layer film is applied via a hard coat layer 54 on the PET film 53. An anti-contamination coating layer 56 is deposited, if need be, on the anti-reflection film 55. It is possible with such structure to suppress the reflected light 57 on the screen surface substantially to zero and preventing an electro-magnetic wave 58 from being radiated from the inside of the CRT. By electrically grounding an electrically conductive layer of the anti-reflection film 55 by an grounding wire 59, static charges may be inhibited, while the electro-magnetic wave shielding effect may be improved further.

Although an anti-reflection film is applied to a PET film and the resulting assembly is tightly affixed to the surface of the display device so as to be used as an anti-reflection film for the CRT surface, the anti-reflection film may be directly applied to the CRT surface, while the film may be used for the surface of the optical substrate, such as a platen of a copying machine or a cover glass for an equipment. The anti-reflection film may be transiently applied to the surface of the PET film which is then intimately affixed to the surface of the optical substrate, or the anti-reflection film may be directly deposited on the optical substrate surface.

Although the PET film is used in the above embodiments as a supporting layer, a vitreous supporting layer may also be employed.

Although an ITO-Au layer is used according to the invention as a first layer, that is as a layer of a metal material admixed with an electrically conductive oxide, in modifications not comprised within the invention a metal material admixed with another electrically conductive oxide may also be employed.

In addition, although the second layer is a layer of silicon dioxide in the present invention, in modifications not comprised within the invention a material having a refractive index of not more than 2.0, such as magnesium difluoride $MgF_2$ with a refractive index n = 1.38, may also be employed for achieving results similar to those of the present invention.

## Claims

1. An anti-reflection film suitable to be deposited on a supporting layer (11; 12) said anti-reflection film comprising:
   two mutually neighboring layers (1, 2), that is a first lower layer (1) suitable to be deposited on said supporting layer (11; 12) and a second upper layer (2), said first layer (1) being formed of an electrically conductive material absorbing the light and said second layer (2) being formed of a material having a refractive index not higher than 2.0, wherein, if an arbitrarily selected shorter wavelength in the visible spectral range is $\lambda_v$, an arbitrarily selected longer wavelength in the visible spectral range is $\lambda_r$, the refractive index and the extinction coefficient for the wavelength $\lambda_v$ of said first layer are $n_v$ and $k_v$, respectively, and the refractive index and the extinction coefficient for the wavelength $\lambda_r$ of said second layer are $n_r$ and $k_r$, respectively, $n_v$ is larger than $n_r$ and $k_v$ is smaller than $k_r$, an anti-reflection property is present at wavelength $\lambda_v$ and $\lambda_r$ and points in between $\lambda_v$ and $\lambda_r$, wherein said second layer (2) is formed of $SiO_2$,
   **characterized in that**
   said first layer (1) is made up of indium tin oxide and gold (Au).

**2.** The anti-reflection film as claimed in claim 1 wherein said first layer (1) is deposited on a supporting layer (11) of a plastic material.

**3.** The anti-reflection film as claimed in claim 1 wherein said first layer (1) is deposited on hard coat layer (12) deposited in turn on a supporting layer (11) of a plastic material.

**Patentansprüche**

**1.** Antireflexionsschicht, welche geeignet ist, auf einer Trägerschicht (11, 12) aufgebracht zu werden, mit:
zwei einander benachbarten Schichten (1, 2), das heißt mit einer ersten unteren Schicht (1), welche geeignet ist, auf einer Trägerschicht (11; 12) aufgebracht zu werden, und mit einer zweiten oberen Schicht (2), wobei die erste Schicht (1) aus einem elektrisch leitfähigen Material gebildet ist, welches Licht absorbiert, und wobei die zweite Schicht (2) aus einem Material gebildet ist, welches einen Brechungsindex aufweist, der nicht größer ist als 2,0, wobei, wenn $\lambda_v$ eine beliebig gewählte kürzere Wellenlänge im sichtbaren Spektralbereich ist, $\lambda_r$ eine beliebig gewählte längere Wellenlänge im sichtbaren Spektralbereich ist, der Brechungsindex und der Extinktionskoeffizient für die Wellenlänge $\lambda_v$ der ersten Schicht $n_v$ bzw. $k_v$ sind und der Brechungsindex und der Extinktionskoeffizient für die Wellenlänge $\lambda_r$ der zweiten Schicht $n_r$ bzw. $k_r$ sind, $n_v$ größer ist als $n_r$ und $k_v$ kleiner ist als $k_r$, die Antireflexionseigenschaft bei den Wellenlänge $\lambda_v$ und $\lambda_r$ und bei Punkten zwischen $\lambda_v$ und bei $\lambda_r$ vorliegt, und wobei die zweite Schicht (2) aus $SiO_2$ gebildet ist,
**dadurch gekennzeichnet,**
**dass** die erste Schicht (1) aus Indiumzinnoxid und aus Gold (Au) gebildet ist.

**2.** Antireflexionsschicht nach Anspruch 1,
bei welcher die erste Schicht (1) auf einer Trägerschicht (11) aus einem Plastikmaterial ausgebildet ist.

**3.** Antireflexionsschicht nach Anspruch 1,
bei welcher die erste Schicht (1) auf einer harten Schicht (12) direkt auf einer Trägerschicht (11) aus einem Plastikmaterial ausgebildet ist.

**Revendications**

**1.** Pellicule antiréfléchissante qui convient pour être déposée sur une couche de support (11 ; 12), ladite pellicule antiréfléchissante comprenant :
deux couches (1, 2) voisines l'une de l'autre, à savoir une première couche (1) inférieure qui convient pour être déposée sur ladite couche de support (11 ; 12) et une deuxième couche (2) supérieure, ladite première couche (20) étant formée d'un matériau électriquement conducteur qui absorbe la lumière et ladite deuxième couche (2) étant formée d'un matériau qui présente un indice de réfraction non supérieur à 2,0, où si une longueur d'onde plus courte sélectionnée de façon arbitraire dans l'étendue du spectre visible est $\lambda_v$, une longueur d'onde plus longue sélectionnée de façon arbitraire dans l'étendue du spectre visible est $\lambda_r$, l'indice de réfraction et le coefficient d'extinction relatifs à la longueur d'onde $\lambda_v$ de ladite première couche sont respectivement $n_v$ et $a_v$, et l'indice de réfraction et le coefficient d'extinction relatifs à la longueur d'onde $\lambda_r$ de ladite deuxième couche sont respectivement $n_r$ et $k_r$, $n_v$ est plus grand que $n_r$ et $k_v$ est plus petit que $k_r$, alors une propriété antiréfléchissante est présente aux longueurs d'onde $\lambda_v$, $\lambda_r$ et se révèle entre $\lambda_v$ et $\lambda_r$, où ladite deuxième couche (2) est formée de $SiO_2$,
**caractérisée en ce que** ladite première couche (1) est constituée d'or (Au) et d'oxyde d'indium et d'étain.

**2.** Pellicule antiréfléchissante selon la revendication 1, où ladite première couche (1) est déposée sur une couche de support (11) faite d'une matière plastique.

**3.** Pellicule antiréfléchissante selon la revendication 1, où ladite première couche (1) est déposée sur une couche de revêtement dure (12) déposée elle-même sur une couche de support (11) faite d'une matière plastique.

**FIG.1A**

**FIG.1B**

**FIG.2**

Im (IMAGINARY PART)

0.75

*a*

*b*

0.5

*a'*

λ=450

*c*

0.25

λ=550

*b'*

0

λ=650     Re (REAL PART)

0.5   0.75   1   1.25   1.5   1.75   2   2.25   2.5

-0.25

*c'*

-0.5

-0.75

# FIG.3

Im (IMAGINARY PART)

0.75

0.5

0.25

*g*

0

Re (REAL PART)

0.5   0.75   1   1.25   1.5   1.75   2   2.25   2.5

-0.25

λ=550

-0.5

λ=650     λ=450   *d*

*e*

-0.75

*f*

# FIG.4

**FIG.5A**

**FIG.5B**

**FIG.6**

**FIG.7**

**FIG.8**

Im (IMAGINARY PART)

FIG.9

Im (IMAGINARY PART)

FIG.10

**FIG.11**

EP 0 753 762 B1

**FIG.12**

FIG.13

**FIG.14**

**FIG.17**

**FIG.15**

**FIG.16**

FIG.18